(19) Europäisches Patentamt
European Patent Office
Office européen des brevets

(11) Veröffentlichungsnummer: **0 091 882**
**B1**

(12) # EUROPÄISCHE PATENTSCHRIFT

(45) Veröffentlichungstag der Patentschrift: **04.06.86**

(21) Anmeldenummer: **83810129.3**

(22) Anmeldetag: **29.03.83**

(51) Int. Cl.⁴: **C 09 B 67/48** // C09B67/10, D06P1/18

(54) **Färbestabiler Farbstoff, Verfahren zu dessen Herstellung und dessen Verwendung zum Färben und Bedrucken synthetischer und halbsynthetischer Fasermaterialien.**

(30) Priorität: **07.04.82 CH 2141/82**

(43) Veröffentlichungstag der Anmeldung: **19.10.83 Patentblatt 83/42**

(45) Bekanntmachung des Hinweises auf die Patenterteilung: **04.06.86 Patentblatt 86/23**

(84) Benannte Vertragsstaaten: **CH DE FR GB IT LI**

(56) Entgegenhaltungen:
**CH - A - 508 701**
**DE - B - 2 524 187**
**GB - A - 2 054 632**
**US - A - 2 007 382**

(73) Patentinhaber: **CIBA-GEIGY AG, Klybeckstrasse 141, CH-4002 Basel (CH)**

(72) Erfinder: **Liechti, Peter, Dr., Alte Olsbergerstrasse 17, CH-4411 Arisdorf (CH)**
Erfinder: **Clément, Antoine, Laufenburgerstrasse 2/5, CH-4058 Basel (CH)**
Erfinder: **Eugster, Peter, Dr., Mattweg 96, CH-4144 Arlesheim (CH)**
Erfinder: **Meyer, Kurt, Im Hirshalm 49, CH-4125 Riehen (CH)**

**EP 0 091 882 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aus der schweizerischen Patentschrift 508 701 ist der Farbstoff der Formel

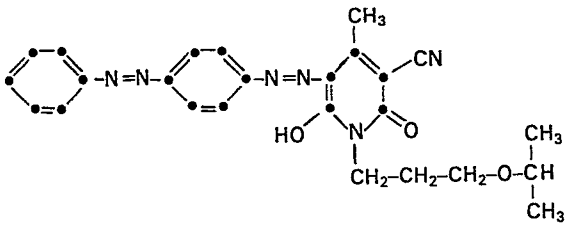

bekannt; ebenso dessen Verwendung zum Färben und Bedrucken von Textilmaterial, insbesondere von Polyesterfasermaterial. Wird dieser Farbstoff in wässeriger Dispersion unter HT-Bedingungen angewandt, so erhält man Ausfärbungen, die unbrauchbar sind, da sie Kristallisations- und Abfiltrationserscheinungen aufweisen.

Aufgabe der Erfindung war es, diesen Farbstoff in eine Form überzuführen, die die genannten Nachteile nicht aufweist.

Die Lösung bot sich in einer neuen Kristallform dieses Farbstoffes an.

Die Erfindung betrifft somit eine neue färbestabile Modifikation des Farbstoffes (im Folgenden als B-Modifikation bezeichnet) der Formel

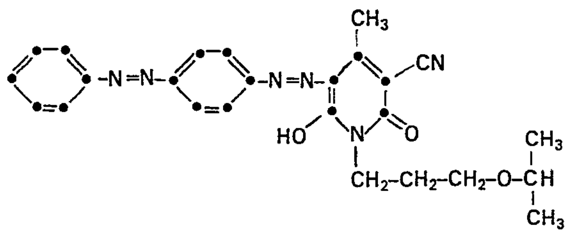

gekennzeichnet durch das in Fig. 1 gezeigte Röntgenbeugungsdiagramm (Cuk-$\alpha_1$-Strahlung) mit den charakteristischen Reflexen und die aus dem Beugungsbild errechneten d-Werte der Netzebenenabstände:

| $d\ 10^{-10}_{m}$ (Å) | 15.1 | 8.5 | 7.2 | 6.3 | 5.93 | 5.56 | 4.91 | 4.71 | 4.58 | 4.29 | 3.87 | 3.62 | 3.51 | 3.31 | 3.10 |
|---|---|---|---|---|---|---|---|---|---|---|---|---|---|---|---|
| I*) | m | m | s | s | m | s | m | m | m | m | m | m | s | ss | m |

I*) = Intensität

wobei hier nur die Linien sehr starker (ss), starker (s), und mittlerer (m) relativer Intensität berücksichtigt sind.

Bekannt ist die amorphe Modifikation des genannten Farbstoffes, welche man erhält durch Kuppeln von diazotiertem 4-Aminoazobenzol mit 1-Isopropoxypropyl -3- cyan-6-hydroxy -4- methyl-2-pyridon in wässerigem Medium. Diese amorphe Modifikation weist jedoch keine grosse Beständigkeit auf; sie wandelt sich z.B. im wässerigen Medium beim Stehen über Nacht bei Raumtemperatur in eine kristalline Modifikation, im folgenden als A-Modifikation bezeichnet, um; aber selbst diese A-Modifikation besitzt noch in wässeriger Dispersion unter HT-Bedingungen angewandt die genannten Nachteile.

Aus der GB-A-2 054 632 ist ferner ein Monoazofarbstoff, nämlich das Kupplungsprodukt von diazotiertem p-Aminobenzoesäurebenzylester auf 1-n-Butyl -3-cyano -6- hydroxy-4-methyl- pyrid-2-on, bekannt, der in 4 verschiedenen Modifikationen vorliegen kann. Zwei dieser Modifikationen (γ und δ) sind insbesondere für Hochtemperaturfärbeprozesse geeignet. Dieser Farbstoff unterscheidet sich jedoch strukturell erheblich von jenem der oben angegebenen Formel, und er tritt in mehr Modifikationen auf als letzterer. Es konnte daher nicht ohne weiteres erwartet werden, dass vom Farbstoff obiger Formel eine färbestabile Modifikation existiert, zumal auch festgestellt wurde, dass die Verfahren zu deren Herstellung nicht mit jenen identisch sind, die zu den γ- und δ-Modifikationen des in der GB-A-2 054 632 beschriebenen Farbstoffes führen.

Die neue, färbestabile B-Modifikation gemäss vorliegender Erfindung erhält man nach verschiedenen Herstellungsverfahren, beispielsweise, indem man:

a) den Farbstoff im trockenen Zustand auf Temperaturen oberhalb seines Schmelzpunktes (über 140 °C) erhitzt, oder

b) dass man die wässrige Suspension des Farbstoffes auf Temperaturen oberhalb 90 °C, vorzugsweise 93–100 °C und insbesondere 95–98 °C erhitzt und die Suspension bei dieser Temperatur hält. Die wässrige Suspension kann dabei derart hergestellt werden, dass man direkt von der Synthesesuspension ausgeht und den Farbstoff nicht isoliert, oder dass man den Farbstoff isoliert und anschliessend in Wasser suspendiert. Dabei ist es möglich, dass man diese wässrige Suspension als solche erhitzt oder dass man in diese wässrige Suspension Wasserdampf einleitet. Man arbeitet dabei gegebenenfalls in Gegenwart von Tensiden, nichtionogener, anionischer oder kationischer Natur und gegebenenfalls weiterer Zusätze wie Antischaummitteln.

Eine weitere Möglichkeit besteht darin, dass man die wässrige Suspension unter Druck auf Temperaturen über 120 °C erhitzt.

Hierfür geeignete Tenside sind beispielsweise das Anlagerungsprodukt von 10 Mol Äthylenoxid an 1 Mol Nonylphenol, ein Gemisch aus Alkyldimethylbenzylammoniumchloriden, ein Dodecyläther eines Äthylenoxid-Propylenoxid-Blockpolymeren, oder tertiäre organische Phosphorsäureester des Anlagerungsproduktes von 2 Mol Äthylenoxid an 1 Mol Laurylalkohol.

In der bevorzugten Herstellungsvariante geht man direkt von der wässrigen Kupplungssuspension aus, wie sie bei der Herstellung des Farbstoffes nach dem Kuppeln anfällt und leitet Wasserdampf ein. Dabei geht der Farbstoff zunächst in eine Suspension der orangen bis braunen A-Modifikation über. Oberhalb ca. 93° verändert sich die Farbe der Suspension nach rot, was die Umwandlung in die B-Modifikation anzeigt. In der Praxis benötigt man dazu 0,2 bis 10, insbesondere 1 bis 3 Stunden. Die Kristallisation kann gegebenenfalls durch Zugabe von Impfkristallen der B-Modifikation eingeleitet werden. Die erhaltene B-Modifikation wird nach ihrer Herstellung beispielsweise durch Filtrieren von der wässrigen Phase abgetrennt und einem bekannten Finish unterworfen. Eine weitere Möglichkeit der Herstellung der B-Modifikation besteht darin, dass man

c) den Farbstoff in einem organischen Lösungsmittel erhitzt; als organische Lösungsmittel kommen beispielsweise Alkohole wie Methanol, Äthanol oder Butanol oder Glykole, dann Äther wie Dioxan oder Glykoläther in Frage. Man erhitzt den Farbstoff in diesen Lösungsmitteln auf Temperaturen von 60 °C bis etwa 20 °C unterhalb der Siedetemperatur des jeweiligen Lösungsmittels.

Die Umwandlung des Farbstoffes (amorph oder A-Modifikation) in die kristalline B-Modifikation lässt sich leicht durch die Aufnahme von Röntgenbeugungsspektren und die Bestimmung von Schmelzpunkten verfolgen. So hat der Farbstoff (amorph/A-Modifikation) einen Schmelzpunkt von ca. 140 °C und besteht aus einem braunorangen Pulver, während die B-Modifikation aus roten Kristallen besteht, welche einen Schmelzpunkt von 157–159 °C aufweist.

Um zum Färben und Drucken technisch geeignete Farbstoffpräparate zu erhalten, kann die erfindungsgemässe B-Modifikation durch übliche mechanische Verfahren, gegebenenfalls in Gegenwart von Wasser und geeigneter Dispergiermittel und anderer üblicher Zusätze in hohe Feinverteilung überführt werden.

Für die gegebenenfalls vorzunehmende Feinverteilung eignen sich die üblichen Vorrichtungen, wie Mühlen, beispielsweise Kugelmühlen, Schwingmühlen, Sandmühlen oder Kneter. Als Dispergiermittel kommen beispielsweise Kondensationsprodukte von ein- oder mehrkernigen aromatischen Verbindungen, wie Naphthalin, Naphthole, Phenole oder deren Sulfonsäuren, mit Formaldehyd oder anderen Substanzen, die mit aromatischen Ringen kondensieren können, wie Harnstoff, Äthylenoxid oder Isocyanate, gegebenenfalls unter Zusatz von Natriumsulfit, ferner Ligninsulfonate und nichtionische oder anionische oberflächenaktive Verbindungen in Betracht.

Unter Färbebedingungen, wie hoher Temperatur und in Gegenwart von Färbereihilfsmitteln, ändert sich die neue färbestabile B-Modifikation hinsichtlich Kristallgrösse und Kristallform nicht, so dass die färberischen Eigenschaften und die Stabilität der Dispersion im Gegensatz zum färbeinstabilen amorphen Farbstoff bzw. seiner A-Modifikation dabei nicht beeinträchtigt werden.

Die in hohe Feinverteilung übergeführte neue Farbstoffmodifikation (B) eignet sich sehr gut zum Färben von synthetischen und halbsynthetischen Textilmaterialien, wie synthetischen linearen Polyestern, z.B. Polyäthylenglykolterephthalat oder chemisch analog aufgebauten Polymeren und von halbsynthetischen Fasermaterialien, wie Cellulosetriacetat, bei Temperaturen von ungefähr 100 bis 220 °C. Die neue Farbstoff-B-Modifikation ist unter Färbebedingungen dispersionsstabil und weist dabei nicht die Nachteile der auf übliche Weise erhältlichen instabilen A-Modifikation des genannten Farbstoffes auf, bei Färbeverfahren, bei denen sie längere Zeit im wässrigen Medium einer höheren Temperatur ausgesetzt ist, zu Farbstoffausflockungen und Abfiltrationen zu führen, die oft ungleichmässige Färbungen mit schlechten Reibechtheiten liefern. Insbesondere beim Färben von Wickelkörpern – beispielsweise Kreuzspulen – treten auch dann keine Agglomeration, Flockung und schliesslich Abfiltration des Farbstoffes an den Spulen auf, wenn die Färbeflotte nur langsam erschöpft wird oder wenn mit einem so grossen Farbstoffüberschuss gearbeitet wird, dass niemals eine Erschöpfung des Färbebades eintritt. Deshalb ist die neue Farbstoffmodifikation besonders in der Apparatefärberei für loses Material und beim Färben von Spulen oder von Garnen sehr gut geeignet.

In den folgenden Beispielen beziehen sich Angaben über Teile, sofern nicht anders vermerkt, auf das Gewicht.

Das Röntgenbeugungsbild wurde mit CuK-α1-Strahlung $\lambda = 1.5405\ 10^{-10}_{m}$ (Å) aufgenommen. Als Eichsubstanz wurde α-Quarz verwendet. Dessen d-Werte sind aus $a_o = 4.913\ 10^{-10}_{m}$ (Å) und $c_o = 5.405\ 10^{-10}_{m}$ (Å) berechnet.

Die Intensität wird dabei in fünf Stufen wie folgt angegeben:

| Stufe | Intensität | Abkürzung |
|---|---|---|
| 1 | sehr stark | ss |
| 2 | stark | s |
| 3 | mittel | m |
| 4 | schwach | sch |
| 5 | sehr schwach | ssch |

Beispiel 1

78,8 g (0,4 Mol) 4-Aminoazobenzol werden in 144 ml Wasser und 144 g 30%iger wässriger Salzsäure in Gegenwart von 4 g eines Äthylenoxid-Propylenoxid-Blockpolymeren auf Laurylalkoholbasis über Nacht gerührt, die entstandene Suspension mit 456 ml Wasser verdünnt und durch Zugabe von 100 ml N Natriumnitritlösung bei 20–24° innerhalb von ca. 40 Minuten diazotiert. Die filtrierte dunkelbraune Diazoniumsalzlösung lässt man nun innerhalb von 25 Minuten zu einer Lösung von 110 g (0,44 Mol) 1-Isopropoxypropyl -3- cyan-6-hydroxy -4- methyl-2-pyridon in 800 ml Wasser und 44 ml 30%iger wässriger Natriumhydroxidlösung laufen, wobei

durch Zugabe weiterer Natriumhydroxidlösung der pH-Wert zwischen 3 und 5 gehalten wird. Nach beendeter Kupplung stellt man den pH-Wert der orangen Suspension auf 11,5 und leitet anschliessend Wasserdampf in das Reaktionsgemisch ein. Nach ca. 20 Minuten ist eine Temperatur von 95° erreicht. Man erhitzt unter Bedingungen einer Wasserdampfdestillation weiter. Schon in den ersten 5 Minuten verändert sich die Farbe der Suspension von orange nach einem kräftigen Rot. Nach 15 Minuten sind praktisch keine orangen Anteile mehr vorhanden. Man rührt noch während weiteren 15 Minuten, kühlt dann auf ca. 60° ab und nutscht den Kristallbrei ab. Nach dem Neutralwaschen und Trocknen erhält man 173 g (94,5% der Theorie) des Farbstoffes der Formel

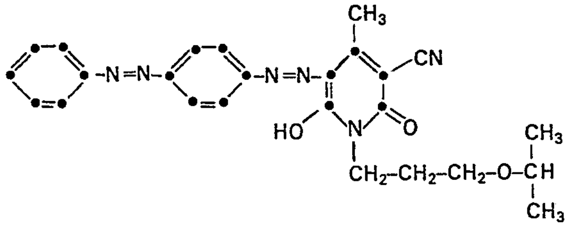

als signalrote Kristalle vom Smp. 157–159° (B-Modifikation)

Beispiel 2

10 Teile der nach Beispiel 1 hergestellten, färbestabilen B-Modifikation des Farbstoffes werden unter Zusatz von 5 Teilen eines Kondensationsproduktes einer Naphthalinsulfonsäure mit Formaldehyd in 60 Teilen Wasser mittels einer Glasperlenmühle bis zu einer ausreichenden Feinverteilung gemahlen. Anschliessend gibt man 15 Teile eines Oxyligninsulfonates zu und trocknet in einer Sprühapparatur.

In einem Druckfärbeapparat werden 40 g der so erhaltenen Farbstoffdispersion in 40 Liter Wasser von 70 °C, das 4 g Oleylpolyglykoläther enthält, suspendiert. Der pH-Wert des Färbebades wird mit Essigsäure auf 4 bis 5 eingestellt. Damit färbt man einen Wickelkörper aus 2000 g Polyäthylenglykolterephthalatgarn, indem man die Temperatur des Färbebades innerhalb von 30 Minuten von 70 auf 130 °C erhöht und 50 Minuten bei dieser Temperatur hält. Nach der üblichen Fertigstellung der Färbung erhält man einen egal intensiv goldgelbgefärbten Wickelkörper ohne Flecken- oder Farbstoffablagerungen.

Verwendet man 10 Teile der amorphen oder A-Modifikation des Farbstoffes anstelle der B-Modifikation und verfährt im übrigen wie angegeben, so erhält man eine gold-gelbe jedoch unegale, reibunechte Färbung, die Farbstoffablagerungen auf der Oberfläche des gefärbten Materials aufweist.

**Patentansprüche**

1. Färbestabile Modifikation des Farbstoffes der Formel

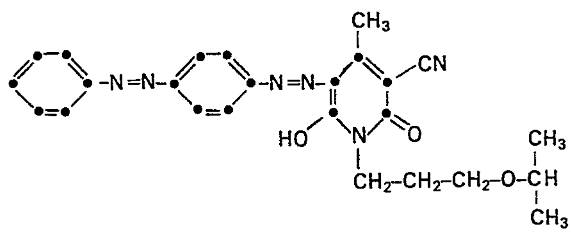

gekennzeichnet durch das in Fig. 1 gezeigte Röntgenbeugungsdiagramm (CuK-$\alpha_1$-Strahlung) mit den charakteristischen Reflexen und die aus dem Beugungsbild errechneten d-Werte der Netzebenenbestände:

| $d\ 10^{-10}_{m}$ (Å) | 15.1 | 8.5 | 7.2 | 6.3 | 5.93 | 5.56 | 4.91 | 4.71 | 4.58 | 4.29 | 3.87 | 3.62 | 3.51 | 3.31 | 3.10 |
|---|---|---|---|---|---|---|---|---|---|---|---|---|---|---|---|
| I*) | m | m | s | s | m | s | m | m | m | m | m | m | s | ss | m |

I*) = Intensität

2. Verfahren zur Herstellung der färbestabilen Modifikation gemäss Anspruch 1, dadurch gekennzeichnet, dass man

a) den Farbstoff im trockenen Zustand auf Temperaturen oberhalb 140 °C erhitzt, oder

b) dass man den Farbstoff in wässriger Suspension auf Temperaturen oberhalb 90 °C erhitzt, oder

c) dass man den Farbstoff in einem organischen Lösungsmittel auf Temperaturen von 60 °C bis 20 °C unterhalb der Siedetemperatur des jeweiligen Lösungsmittels erhitzt.

3. Verwendung der färbestabilen Modifikation des Farbstoffes gemäss Anspruch 1 oder der gemäss Anspruch 2 erhaltenen färbestabilen Modifikation zum Färben und Bedrucken von synthetischen und halbsynthetischen Fasermaterialien.

**Revendications**

1. Forme stable du point de vue de la teinte du colorant de formule

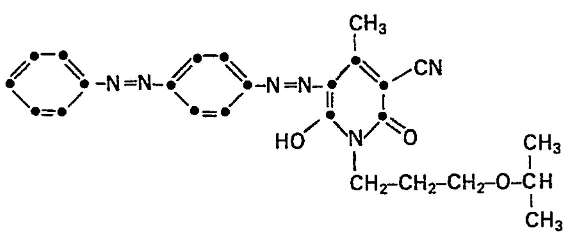

caractérisée par le diagramme de diffraction des rayons X (raie $K_1$ du cuivre) représenté sur la figure 1 ayant les réflexions caractéristiques et les valeurs d des distances réticulaires obtenues à partir de l'image de diffraction:

| d $10^{-10}_{m}$ (Å) | 15.1 | 8.5 | 7.2 | 6.3 | 5.93 | 5.56 | 4.91 | 4.71 | 4.58 | 4.29 | 3.87 | 3.62 | 3.51 | 3.31 | 3.10 |
|---|---|---|---|---|---|---|---|---|---|---|---|---|---|---|---|
| I*) | m | m | s | s | m | s | m | m | m | m | m | m | s | ss | m |

I*) = Intensité.

2. Procédé pour l'obtention de la forme stable du point de vue de la teinte selon la revendication 1, caractérisé par le fait que l'on

a) chauffe le colorant à l'état sec à des températures supérieures à 140 °C, ou

b) que l'on chauffe le colorant en suspension aqueuse à des températures supérieures à 90 °C, ou

c) que l'on chauffe le colorant dans un solvant organique à des températures de 60 à 20 °C au-dessous de la température d'ébullition du solvant considéré.

3. Utilisation de la forme stable du point de vue de la teinte du colorant selon la revendication 1 ou de la modification stable du point de vue de la teinte obtenue selon la revendication 2 pour la teinture et l'impression de matériaux fibreux synthétiques et semi-synthétiques.

**Claims**

1. A modification of the dye of the formula

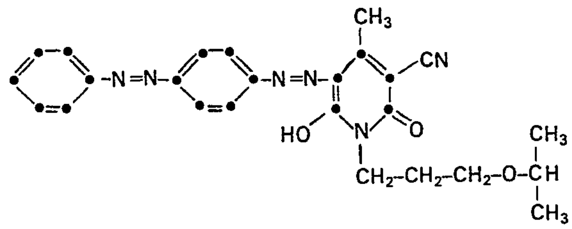

which modification is stable to dyeing and which is characterised by the X-ray diffraction pattern shown in Fig. 1 (CuK-$\alpha_1$ radiation) with the characteristic reflexes and by the d values of the interplanar spacings calculated from the diffraction pattern:

| d $10^{-10}_{m}$ (Å) | 15.1 | 8.5 | 7.2 | 6.3 | 5.93 | 5.56 | 4.91 | 4.71 | 4.58 | 4.29 | 3.87 | 3.62 | 3.51 | 3.31 | 3.10 |
|---|---|---|---|---|---|---|---|---|---|---|---|---|---|---|---|
| I*) | m | m | s | s | m | s | m | m | m | m | m | m | s | ss | m |

I*) = Intensity.

2. A process for producing the modification stable to dyeing according to claim 1, which process comprises:

a) heating the dye in the dry state to temperatures above 140 °C;

b) heating the dye in an aqueous suspension to temperatures above 90 °C; or

c) heating the dye in an organic solvent to temperatures in the range from 60 °C to 20 °C below the boiling temperature of the solvent concerned.

3. Use of the modification of the dye according to claim 1, which modification is stable to dyeing, or of the modification stable to dyeing obtained according to claim 2, for dyeing or printing synthetic and semi-synthetic fibre materials.

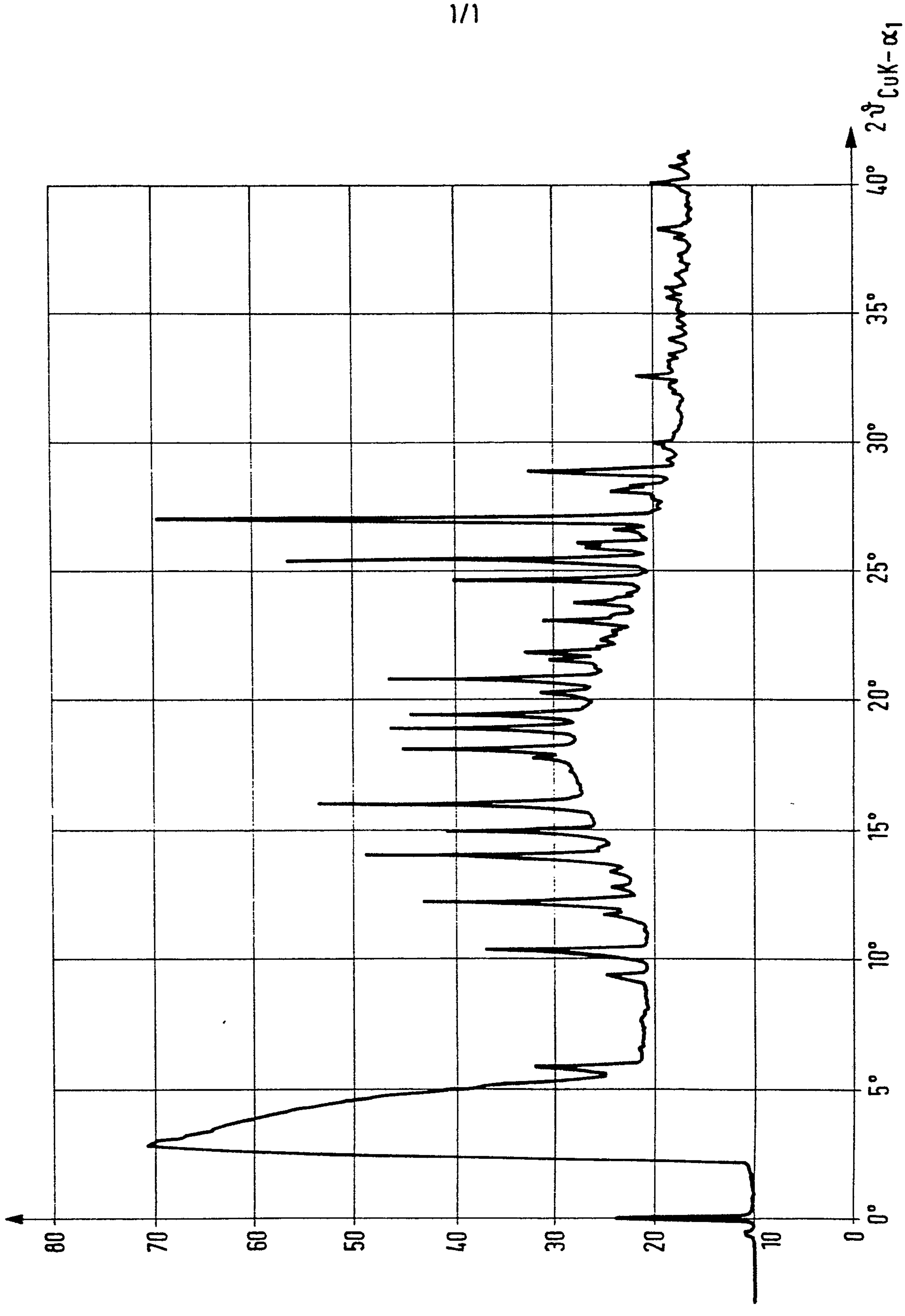
80
70
60
50
40
30
20
10
0
0°
5°
10°
15°
20°
25°
30°
35°
40°
2ϑ CuK-α1